# EUROPÄISCHE PATENTSCHRIFT

(11) **EP 4 066 917 B1**
(45) Veröffentlichungstag und Bekanntmachung des Hinweises auf die Patenterteilung: **09.04.2025**
(21) Anmeldenummer: 21212661.9
(22) Anmeldetag: 07.12.2021
(51) Int. Cl.: B01D 35/153, B01D 35/027, B01D 24/12, B01D 24/42, B01D 24/00, C02F 1/28, C02F 1/42, C02F 1/00

(54) **WASSERFILTERPATRONE MIT ZWEI KONZENTRISCH ZUEINANDER ANGEORDNETEN WASSERFILTERPATRONENAUSLÄSSEN**
WATER FILTER CARTRIDGE WITH TWO CONCENTRICALLY ARRANGED WATER FILTER CARTRIDGE OUTLETS
CARTOUCHE DE FILTRE À EAU POURVUE DE DEUX SORTIES CARTOUCHE DE FILTRE À EAU AGENCÉES DE MANIÈRE CONCENTRIQUE L'UNE PAR RAPPORT À L'AUTRE

(30) Priorität: 29.03.2021 DE 102021107856
(43) Veröffentlichungstag der Anmeldung: 05.10.2022
(73) Patentinhaber: ACLARIS GmbH, Lindau Zweigniederlassung Rebstein, 9445 Rebstein (CH)
(72) Erfinder: Heitele, Bernd-Karl-Josef, 9437 Marbach (CH)
(74) Vertreter: Otten, Roth, Dobler & Partner mbB Patentanwälte

(56) Entgegenhaltungen:
- WO-A1-2016/110321
- WO-A1-2017/037701
- GB-A- 993 876
- KR-Y1- 200 404 491
- US-A1- 2020 369 537

## Beschreibung

Die Erfindung betrifft eine Wasserfilterpatrone nach dem Oberbergriffe des Anspruchs 1.

### Stand der Technik:

Wasser aufbereitende Geräte erfreuen sich immer mehr Beliebtheit. Zum einen in der Form von Wasser kalt aufbereitenden Geräten und zum anderen in der Form von Wasser heiß aufbereitenden Geräten.

Wasser kalt aufbereitende Geräte können beispielsweise Trinkwasserspender sein. Wasser heiß aufbereitende Geräte können beispielsweise Kaffee- und/oder Teemaschinen oder dgl. sein.

Um sicherzustellen, dass das mit diesen Geräten/Maschinen entsprechend aufbereitete Wasser den betreffenden Gesundheitsanforderungen entspricht, ist üblicherweise zumindest eine dieser Aufbereitung vorangehende Filterung des verwendeten Wassers mit Aktivkohle vorgesehen, ggf. auch eine Filtrierung zur Entfernung unerwünschter Geschmacksstoffe.

Bei Wasser heiß aufbereitenden Maschinen ist üblicher Weise auch eine Filterstrecke zur Entkalkung des verwendeten Wassers und damit zum Schutz der damit in Kontakt kommenden Maschinenteile, wie Heizung und Rohrleitungen, vorgesehen.

Im Stand der Technik offenbart die WO2016/110321 A1 eine Filterkartusche zum Anschluss an einen leitungsgebundenen Filterkartuschen-Anschlusskopf zur Aufbereitung von Flüssigkeiten.

Diese Filterkartusche umfasst ein zylindrisch geformtes Gehäuse und einen stirnseitig fest damit verbundenen kappenförmigen Gehäuseteil mit grob quaderähnlicher Kontur zum einsteckbaren Anschluss an einen leitungsgebundenen Anschlusskopf.

An dem kappenförmigen Gehäuseteil sind seitlich an zwei gegenüberliegenden Seiten zweimal zwei Ein- und Auslassöffnungen realisiert. Diese Ein- und Auslassöffnungen sind jeweils separat in der Art zylindrischer Öffnungen ausgebildet und in Einsteckrichtung hintereinander und parallel zueinander angeordnet.

Damit soll ein multifunktionales Anschlusssystem für eine ganze Reihe unterschiedlich aufgebauter und wirkender Filterkartuschen bereitgestellt werden. Z.B. sollen damit sowohl standardmäßige Filterkartuschen als auch Hochleistungsfilterkartuschen mit hohem Durchsatzvermögen an ein und den selben Filterkartuschen-Anschlusskopf angeschlossen werden können, z.B. mit oder ohne Verschnittmöglichkeit.

Die US 2020/0369537 A1 offenbart eine Wasserfilterpatrone zum Einsatz in einen Wassertank. Diese Wasserfilterpatrone umfasst ein grob zylinderartig ausgebildetes Gehäuse mit einem Wassereinlass und einem Wasserauslass an einer seiner Stirnseiten, die konzentrisch zueinander angeordnet sind. Zwischen dem Wassereinlass und dem Wasserauslass befinden sich jeweils fest und unbeweglich in/an dem Gehäuse angeordnete Bauteile zur Ausbildung einer Filterstrecke im Inneren der Wasserfilterpatrone.

Zusätzlich ist in/an dem Gehäuse eine von der Filterstrecke vollständig getrennt ausgebildete Aufnahmekammer für ein Mittel zur Verhinderung von Ablagerungen, insbesondere zur Verhinderung von Kalkablagerungen im Inneren des Wassertanks, in welchem die Filterpatrone eingesetzt werden soll, fest ausgebildet und mittels einer ebenfalls fest ausgebildeten Verbindungsöffnung mit der Gehäuseaußenseite flüssigkeitsdurchlässig verbunden. Diese Verbindungsöffnung ist derart, dass im Betriebszustand, bei in einem Wassertank eingesteckter Wasserfilterpatrone, im Wassertank zur Bevorratung eingefülltes Wasser durch die Verbindungsöffnung eindringen und mit dem Mittel zur Verhinderung von Ablagerungen im Inneren des Wassertanks in Kontakt kommen kann. Das Wasser, welches dabei mit dem Mittel in Kontakt kommt, wird dabei von diesem so aufbereitet, dass zum einen gegen die Keimbildung eingewirkt wird um die Kristallisation von insbesondere Kalk zu stören und zum anderen um bereits am Wassertank ausgebildeten Ablagerungen entgegenzuwirken.

Die US 993,876 offenbart ein Filtersystem für eine Kreislauf-Druckölschmierung, umfassend eine in einem Schmierölspeicherbehälter angeordnete und in einem Hauptrückflussstrang fluidleitend geschaltete Filtervorrichtung sowie eine in einem zum Hauptrückflussstrang im Bypass geschaltet angeordnete Düse. Der Auslass dieser Düse ist unterhalb des Niveaus des im Schmierölspeicherbehälter für den Betriebsfall vorgesehenen Ölstandspiegel.

Im Inneren der Filtervorrichtung ist ein Filtermagnet zum Rückhalten ferromagnetischer Fremdkörper aus dem rückfließenden Schmieröl angeordnet.

Sowohl der Auslass des Schmierölspeicherbehälters als auch der Auslass der in geringem Abstand darüber angeordneten Filtervorrichtung sind ebenfalls düsenartig ausgebildet.

Die Bypassdüse weist einen geringeren Fließwiderstand als die Filterstrecke auf, sodass trotz des geringeren Leitungsquerschnitts im Vergleich zum Hauptrückflussstrang durch die Filtervorrichtung das im Schmierölspeicherbehälter vorgehaltene und im Vergleich zum rückfießenden Schmieröl kältere Schmieröl von diesem mitgesogen und dadurch kühlrelevant in den Schmierkreislauf eingespeist wird.

Alle diese Filterelemente sind fest und unbeweglich sowohl im Filtersystem als auch in der Filtervorrichtung angeordnet.

Aufgabe und Vorteile der Erfindung:
Der Erfindung liegt die Aufgabe zugrunde, eine Wasserfilter- und Anschlussstruktur bereitzustellen, mit der eine Wasser aufbereitende Maschine gemäß des einleitend beschriebenen Standes der Technik, bei bestmöglicher Ausnützung des Tankvolumens zur Wasserbevorratung, zuverlässig mit Wasser sowohl für eine Kaltaufbereitung als auch für eine Heißaufbereitung versorgt werden kann.

Die Lösung der Aufgabe erfolgt ausgehend vom Oberbegriff des Anspruchs 1 durch dessen kennzeichnende Merkmale. In den Unteransprüchen sind vorteilhafte und zweckmäßige Ausführungen angegeben.

Dementsprechend betrifft die Erfindung eine **Wasserfilterpatrone,** die zwei konzentrisch zueinander angeordnete Wasserfilterpatronenauslässe umfasst.

Dies ermöglicht die Bereitstellung zweier Wasser- oder Filtratströme, die in einer einzigen Wasserfilterpatrone jedoch für unterschiedliche Anwendungszwecke (nachfolgende Kaltwasseraufbereitung und nachfolgende Heißwasseraufbereitung in einer Getränke aufbereitenden Maschine) über jeweils unterschiedliche Aufbereitungsstrecken geführt sind, und dementsprechend auch aus einem, beide Filterstrecken der einen Wasserfilterpatrone gemeinsam speisenden Wassertank versorgt werden können.

Bei der Erhitzung von Wasser (Heißwasseraufbereitung) lösen sich ab einer Temperatur von über 60 °C insbesondere ab 65 °C Mineralien aus dem Wasser und lagern sich an den sie umgebenden Oberflächen ab, insbesondere in der Form von Kalk. Dies wirkt sich nachteilig auf den Betrieb und die Lebensdauer der davon betroffenen Maschinenkomponenten und schlussendlich auch der Maschine aus. Einerseits isolieren solche Ablagerungen und reduzieren damit den Wirkungsgrad der Heizung und andererseits reduzieren sie zunehmend den wirksamen Querschnitt der betroffenen Leitungen.

Demgegenüber spielt dieser Verkalkungseffekt bei der Bereitstellung von kaltem, nicht erhitztem Wasser, z.B. in der Form eines Trinkwasserspenders, eine vergleichswese untergeordnete Rolle. Die Anforderungen an die Filterung des dafür verwendeten Speisewassers können deshalb entsprechend niedriger, zumindest jedoch anders als an die für die Heißwasseraufbereitung sein.

Um die Wirkung des Filtermaterials für die Heißwasseraufbereitung bestmöglich nutzbar machen zu können, wird deshalb dafür ein erster, separater Strömungskanal durch die Wasserfilterpatrone bereitgestellt, insbesondere bevorzugt nur dafür. Dieser Strömungskanal mündet im ersten Wasserfilterpatronenauslass. Ein zweiter, leitungstechnisch vom ersten getrennter Strömungskanal für die Versorgung der Kaltwasseraufbereitung Strömungskanal mündet im zweiten Wasserfilterpatronenauslass.

Der zur Speisung für die in der Maschine nachfolgende Heißwasseraufbereitung vorgesehene, erste Strömungskanal oder Strömungspfad durch die Wasserfilterpatrone kann zur Vermeidung solcher Ausfällungen und Kalkablagerungen dementsprechend eine von dem aufzubereitenden Wasser zu durchströmende Filterkammer mit einem Entkalkungsmittel umfassen, die insbesondere einen Ionentauscher enthalten kann.

Für den Anschluss der beiden voneinander getrennt ausgebildeten Wasserfilterpatronenauslässe an einem dafür vorgesehenen Wassertank ist insgesamt lediglich ein einzelnes, Wasser durchleitendes Anschlusselement mit zwei leitungstechnisch voneinander getrennten Durchleitungen zur Ausleitung der zwei separat aus der Wasserfilterpatrone herausgeführten Wasserströme erforderlich.

Dies hat den Vorteil, dass nur an einer gemeinsamen Kontaktstelle zwischen Wasserfilterpatrone und Wassertank zwei separat ausgebildete Wasserdurchleitungen abgedichtet werden müssen. Dies ist, insbesondere bei der Trennung und wieder Zusammenführung des Wassertanks von und mit einer mit dem Wassertank und der Wasserfilterpatrone betriebenen Getränke aufbereitenden Maschine sehr viel einfacher und zuverlässiger zu bewerkstelligen, als beispielsweise bei zwei getrennt voneinander ausgebildeten Wasserdurchleitungen, die dazu immer gleichzeitig und korrekt ausgerichtet sein müssen, um unerwünschtes Austreten von Wasser im Verbindungsbereich zu vermeiden.

Dies ist wichtig, da der Wassertank üblicherweise zu jedem Nachfüllvorgang von der Getränke aufbereitender Maschine abgenommen, mit Wasser befüllt und wieder Wasser leitend mit der Maschine verbunden werden. Und dabei sollte möglichst kein Wasser aus der zur Wasserführung vorgesehenen Struktur zwischen Wassertank und/oder der Wasserfilterpatrone und der Maschine austreten und in unerwünschter Weise den Tankanschlussbereich der Maschine wässern.

Denn, derart austretendes Wasser hat nicht nur einen unschönen, anwendungsunfreundlichen Effekt indem es schon alleine aus hygienischen und optischen Gründen entfernt werden sollte. Es kann auch den zuverlässigen Betrieb der Maschine gefährden, indem möglicher Weise durch Eindringen des Wassers in die Maschine Teile dieser defekt werden könnten, oder ggf. auch durch dessen Kontakt mit elektrischen Leitungen die Gefahr eines elektrischen Schlages für Nutzer der Maschine auftreten könnte.

Der erste der beiden konzentrisch zueinander angeordneten Wasserfilterpatronenauslässe kann zumindest axial, vorzugsweise auch radial im Gehäuse der Wasserfilterpatrone beweglich angeordnet sein.

Dadurch kann er fest und zuverlässig dichtend mit einem komplementären, ebenfalls beweglichen, jedoch am Wassertank angeordneten Dichtelement verbunden werden, welches insbesondere als federbelastetes Wassertankauslassventil ausgebildet sein kann. Bevorzugt ist dieser erste Wasserfilterpatronenauslass dabei mit dem Ventilstößel des betreffenden Wassertankauslassventils verbindbar ausgebildet.

Bei dem Wassertankauslassventil handelt es sich bevorzugt um das dem zweiten, äußeren der beiden konzentrisch zueinander angeordneten Wasserfilterpatronenauslässe zugeordnete Wassertankauslassventil.

Durch die dem ersten Wasserfilterpatronenauslass verliehene Beweglichkeit kann dieser Öffnungs- und Schließbewegungen des Wassertankauslassventils gegenüber dem Wassertank mitvollziehen, ohne jegliche relative Positionsänderung zwischen dem Wassertankauslassventil und dem Wasserfilterpatronenauslass.

Das heißt, wenn der Ventilstößel dieses zweiten Wassertankauslassventils betätigt wird, dann öffnet sich dieses Ventil und gibt damit den zweiten Wasserfilterpatronenauslass, bei entsprechend befülltem Wassertank, zur Entnahme des über den zweiten Wasserfilterkanal aufbereiten Wassers frei.

Der erste Wasserfilterpatronenauslass kann sich dabei mit dem Ventilstößel des zweiten Wassertankauslassventils mitbewegen. Die Abdichtung des ersten Wasserfilterpatronenauslasses erfolgt durch ein weiteres, dem ersten Wasserfilterpatronenauslass zugeordnetes Wassertankauslassventil, welches konzentrisch innerhalb des dem zweiten Wasserfilterpatronenauslass zugeordneten Wassertankauslassventils angeordnet ist.

Dieses weitere, dem ersten Wasserfilterpatronenauslass zugeordnete Wassertankauslassventil wird, zur Vereinheitlichung der Bezüge zwischen den unterschiedlichen Bauteilen und zur verständlicheren Zuordnung unter Bezugnahme auf den ersten Strömungskanal durch die Wasserfilterpatrone, als erstes Wassertankauslassventil bezeichnet. Entsprechendes gilt für das dem zweiten Strömungskanal zugeordnete und somit als zweites Wassertankauslassventil bezeichnete Wassertankauslassventil, sowie auch für alle weiteren dem jeweiligen Strömungskanal bis zur Getränke aufbereitenden Maschine zur Wasserführung nachfolgenden Bauteile.

Der erste, beweglich angeordnete Wasserfilterpatronenauslass kann steckelementartig mit einem rohrförmigen Abschnitt zur wasserdichten Interaktion mit einem komplementären, tankseitig angeordneten Wasserfilterpatronen-Anschlusselement, insbesondere dem Tankauslassventil, ausgebildet sein.

Bevorzugt ist der rohrförmige Abschnitt des Wasserfilterpatronenauslasses aus einem weicheren Material gefertigt, als das komplementäre, tankseitig angeordnete Wasserfilterpatronen-Anschlusselement insbesondere Tankauslassventil. Dadurch kann er sehr passgenau, ggf. mit leichtem Über- oder Untermaß zum komplementären Ventilelement, bevorzugt dessen Ventilstößel, gefertigt und in dieses ein- oder aufgesteckt werden.

Bei einer Ausführung bei der der erste Wasserfilterpatronenauslass in eine im Wassertankauslassventil ausgebildete Aufnahmeöffnung einsteckbar ausgebildet ist, bildet die radial äußere Wandung seines rohrförmigen Abschnitts eine Dichtfläche zur Anlage an der radial inneren Fläche der komplementären Aufnahmeöffnung am Tankauslassventil. Durch das vergleichsweise weichere Material und ggf. einem leichten Übermaß kann der rohrförmige Abschnitt einen besonders festen und gut dichtenden Presssitz mit der Aufnahmeöffnung am Tankventil ausbilden.

Die Fixierkräfte dieses Presssitzes sind so groß, dass diese auch zuverlässig einer Zugwirkung entgegenstehen, die ggf. während der Entnahme des Wassertanks von der Getränke aufbereitenden Maschine bei einem vorübergehenden geräteseitigen Festsitzen des Tankventils auftreten können.

Bei einer anderen Ausführung ist der erste Wasserfilterpatronenauslass auf das Wassertankauslassventil aufsteckbar ausgebildet, vorzugsweise auf dessen Ventilstößel. Dabei bildet die radial innere Wandung seines rohrförmigen Abschnitts eine Dichtfläche zur Anlage an der radial äußeren Fläche des komplementären Aufnahmeteils am Tankauslassventil. Auch hierbei kann durch das vergleichsweise weichere Material und ggf. einem leichten Untermaß der rohrförmige Abschnitt einen besonders festen und gut dichtenden Presssitz mit der Aufnahmeöffnung am Tankventil ausbilden und wie zu der vorigen Ausführungsform beschrieben, einem Abziehen des Wasserfilterpatronenauslasses zuverlässig widerstehen.

Der rohrförmige Abschnitt kann auch in dieser Ausführung eine radial gegenüber dem komplementären, tankseitig angeordneten Wasserfilterpatronen-Anschlusselement wirkende Dichtfläche ausbilden. In diesem Fall an seiner radial inneren Fläche, die gegenüber einer radial äußeren Fläche am Tankauslassventil anliegt.

Der erste der beiden konzentrisch zueinander angeordneten Wasserfilterpatronenauslässe ist einem ersten durch die Wasserfilterpatrone ausgebildeten Strömungskanal zugeordnet und der zweite Wasserfilterpatronenauslass einem vom ersten Strömungskanal zumindest abschnittsweise getrennt ausgebildeten zweiten Strömungskanal durch die Wasserfilterpatrone zugeordnet.

Der erste Strömungskanal umfasst eine zumindest axial, vorzugsweise auch radial im Gehäuse der Wasserfilterpatrone beweglich angeordnete Filterkammer. Dadurch kann der erste Wasserfilterpatronenauslass fest mit der Filterkammer verbunden sein, z. B. in der Form eines an die Filterkammer angeformten Auslassstutzens. Dieser kann wie bereits oben beschrieben fest mit dem Tankauslassventil verbunden werden, z. B. mittels einer Steckverbindung.

An der beweglich angeordneten Filterkammer und/oder in einer komplementären Aufnahmekammer für die Filterkammer in der Wasserfilterpatrone können Abstandsrippen und/oder Abstandsnoppen oder dgl. zur Beabstandung der beiden zueinander ausgebildet sein. Dadurch kann ein gewünschter Durchflussquerschnitt zwischen der Wandung der Aufnahmekammer und dem Gehäuses der beweglich darin angeordneten Filterkammer sichergestellt werden, welcher z.B. Teil des zweiten Strömungskanals der Wasserfilterpatrone sein kann.

Vorzugsweise ist die komplementäre Aufnahmekammer für die Filterkammer als von Filtermaterial freie Strömungskammer als Teil des zweiten Strömungskanals ausgebildet. Dadurch kann die Filterkammer möglichst ungehindert bewegbar in der Aufnahmekammer angeordnet werden und der Bewegung des Tankventils in o.a. Weise folgen.

Vorzugsweise ist zumindest in einem der beiden Strömungskanäle ein Rückschlagventil angeordnet. Dadurch kann in der Filterpatrone ein Sicherheitselement gegen unerwünschtes Rücksaugen aus einem stromabwärtingen Leitungsbereich für den betreffenden Strömungskanal bereitgestellt werden, insbesondere gegen unerwünschtes Rücksaugen aus dem anderen Strömungskanal.

Besonders bevorzugt ist auch im zweiten der beiden Strömungskanäle ein Rückschlagventil angeordnet. Damit kann für beide Strömungskanäle ein zuverlässiger Schutz gegen ein Rücksaugen von Flüssigkeit aus einem stromabwärtigen Bereich gewährleistet werden.

Die Wasserfilterpatrone kann auch ein patronenseitiges Fixierelement zur Interaktion mit einem komplementären, tankseitigen Wasserfilterpatronen-Fixierelement aufweisen, insbesondere in der Form eines Bajonettverschlusses. Damit ist die Bereitstellung einer festen Verbindung zwischen Wasserfilterpatrone und dem Wassertank möglich. Dies wirkt sich auch positionsstabilisierend und damit positiv auf die Wirkung der an der Wasserfilterpatrone und dem Wassertank ausgebildeten und/oder angeordneten Dichtelemente aus.

In der Filterkammer kann ein Ionentauschermaterial angeordnet sein. Mit diesem kann das darüber geleitete Wasser soweit entkalkt werden, dass bei einer nachfolgenden Erhitzung keine oder wenigstens nur geringe Kalkmengen auskristallisieren.

Die Wasserfilterpatrone kann auch einen Partikelfilter und/oder einen Aktivkohlefilter umfassen. Der Partikelfilter schützt gegen grobe Verunreinigungen, der Aktivkohlefilter stellt die unbedenkliche Genießbarkeit des die Wasserfilterpatronen durchlaufenen Wassers sicher.

Das tankseitig angeordnete, komplementäre Wasserfilterpatronen-Anschlusselement, das insbesondere als Tankauslassventil ausgebildet ist, ist als Doppelventil mit konzentrisch angeordneten Ventildurchgängen auszubilden. Dies ermöglicht den Anschluss der Wasserfilterpatrone mit ihren beiden ebenfalls konzentrisch angeordneten Wasserpatronenauslässen an ein einzelnes Anschlusselement, was, wie o.a. ausgeführt, der Zuverlässigkeit der Verbindungsabdichtungen massiv entgegenkommt.

Die beiden Ventile des Doppelventils bilden je ein federbelastetes Ventil aus. Dadurch können sie, im von außen unbelasteten Zustand, aufgrund der von der jeweiligen Feder auf den jeweiligen Ventilstößel wirkenden Schließkraft den Wassertank abdichten. Der Tank kann mit zu bevorratendem Wasser befüllt werden. Erst wenn zumindest gegen einen dieser Ventilstößel gedrückt wird, öffnet das betreffende Ventil gegen die auf ihn wirkende Federkraft und ggf. im Wassertank bevorratetes Wasser kann dann auslaufen, bzw. im an eine Getränke aufbereitenden Maschine angeschlossenen Zustand durch diese aus dem Wassertank bezogen werden.

Um eine betriebssichere Verbindung zwischen Wassertank und einer Getränke aufbereitenden Maschine bereitzustellen, kann am Wassertank bevorzugt auch ein tankseitiger Geräteanschluss mit zwei konzentrisch zueinander angeordneten Wasserauslässen ausgebildet sein. Dieser tankseitige Geräteanschluss ist vorzugsweise komplementär zu einem geräteseitig angeordneten Tankanschlusselement auszubilden und kann dementsprechend mit diesem zur Wasserversorgung der Getränke aufbereitenden Maschine zusammenwirken.

Eine solche **Wasser aufbereitende Maschine** umfasst einen geräteseitig angeordneten oder anordenbaren komplementären Tankanschluss zu einem tankseitigen Geräteanschluss eines Wassertanks mit zwei konzentrisch zueinander angeordneten Wasserauslässen gemäß einer der oben beschriebenen Ausführungsformen.

Dieser geräteseitige Tankanschluss wirkt beim Verbinden des Wassertanks mit der Getränke aufbereitenden Maschine öffnend auf die beiden Ventile des Doppelventils, so dass die Maschine durch die Wasserfilterpatrone über zwei unterschiedliche Filterstrecken aufbereitetes Wasser aus dem Wassertank beziehen kann. Einmal für die Bereitstellung von kalt aufzubereitenden Getränken und einmal für die Bereitstellung von heiß aufzubereitenden Getränken.

### Beschreibung eines Ausführungsbeispiels:

Nachfolgend wird die Erfindung anhand der Figuren näher erläutert.

Es zeigen beispielhaft und schematisch:
- Figur 1:: eine Teilansicht auf einen Wassertank mit einer darin eingesetzten Wasserfilterpatrone in Schnittdarstellung mit zwei konzentrisch zueinander angeordneten Wasserfilterpatronenauslässen und mit einem tankseitigen Maschinenanschlusselement sowie ein davon beabstandetes, maschinenseitiges Tankanschlusselement.
- Figur 2:: Eine Darstellung wie in Figur 1, jedoch mit zusammengefügten Anschlusselementen.
- Figur 3:: Eine ähnliche Ansicht wie in Fig. 2, jedoch mit Fokus auf die Wasserfilterpatrone mit zwei hydraulisch getrennten Strömungskanälen und den zwei konzentrisch zueinander angeordneten Wasserfilterpatronenauslässen zur Bereitstellung zweier unterschiedlich aufbereiteter Filtratströme.

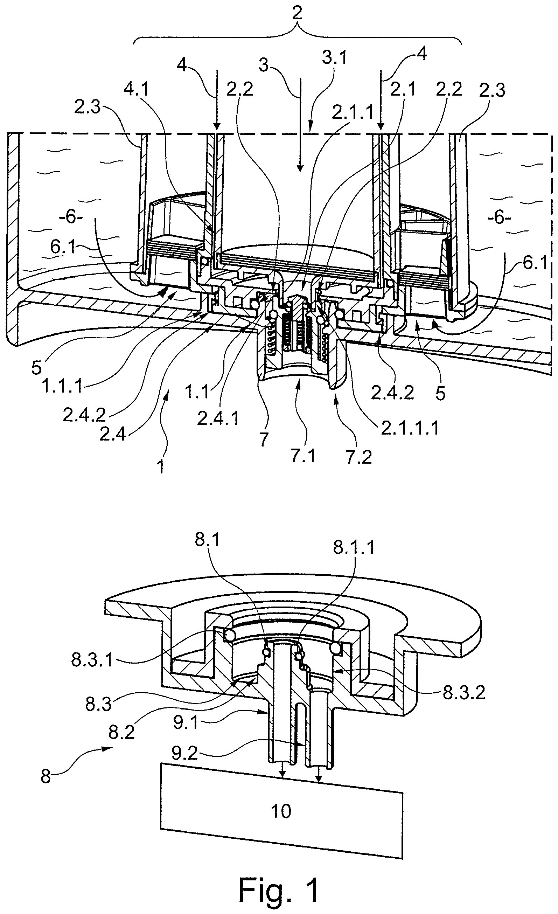

Dementsprechend zeigt die **Figur 1** eine ausschnittsweise Schnittdarstellung eines Wassertanks 1 mit darin eingesetzter Wasserfilterpatrone 2.

Die Wasserfilterpatrone 2 weist zwei konzentrisch zueinander angeordnete Wasserfilterpatronenauslässe auf, einen ersten inneren Wasserfilterpatronenauslass 2.1 und einen zweiten, äußeren Wasserfilterpatronenauslass 2.2. Diese sind zwei durch die Wasserfilterpatrone 2 führenden, hydraulisch voneinander getrennten Strömungskanälen zugeordnet, einem ersten Strömungskanal 3 und einem zweiten Strömungskanal 4.

Gespeist wird die Wasserfilterpatrone 2 mit im Wassertank 1 bevorratetem Wasser 6 über deren Einlass 5. Die Fließrichtung des Wassers 6 ist symbolisch durch die Pfeile 6.1 dargestellt.

Der Wassertank 1 umfasst ein sich unterhalb seines Bodens 1.2 von diesem weg erstreckendes, tankseitiges Maschinenanschlusselement 7. Dieses Maschinenanschlusselement 7 ist hülsenartig ausgebildet und zur dichtenden Verbindung mit einem vom Tank 1 beabstandet dargestellten, maschinenseitigen Tankanschlusselement 8 vorgesehen. Das Tankanschlusselement 8 weist zur dichten Interaktion zwischen Wassertank und Getränke aufbereitender Maschine eine komplementär geformte Ausnehmung/Aufnahme 8.3 zur Aufnahme des Maschinenanschlusselements 7 auf. Zur Erhöhung der Dichtwirkung dieser Verbindung kann ein Dichtelement 8.3.1, z.B. ein O-Ring, zwischen Maschinenanschlusselement 7 und Ausnehmung/Aufnahme 8.3 bereitgestellt werden. Dieses Dichtelement 8.3.1 ist bevorzugt an der Ausnehmung/Aufnahme 8.3 angeordnet.

Das Maschinenanschlusselement 7 umfasst im Weiteren auch zwei in ihm konzentrisch zueinander angeordnete Wassertankauslassventile 7.1, 7.2. Das konzentrisch innere Wassertankauslassventil 7.1 ist zum Öffnen und Schließen des ersten Strömungskanals 3 durch die Wasserfilterpatrone 2 ausgebildet. Das konzentrisch äußere Wassertankauslassventil 7.2 ist zum Öffnen und Schließen des zweiten, vom ersten getrennt ausgebildeten Strömungskanals 4 durch die Wasserfilterpatrone 2 ausgebildet.

Das erste Wassertankauslassventil 7.1 ist in einem Bauteil des Maschinenanschlusselementes 7 angeordnet, welches selbst als Ventilstößel des zweiten Wassertankauslassventils 7.2 wirkt. Es umfasst einen Ventilsitz, der vorzugsweise als Teil des zweiten Wassertankauslassventils 7.2 ausgebildet ist. Der Ventilstößel dieses ersten Wassertankauslassventils 7.1 ist konzentrisch in einer Öffnung des Ventilstößels des zweiten Wassertankauslassventils 7.2 aufgenommen und insbesondere mittels einer Rückstellfeder gegen den Ventilsitz anliegend, dichtend vorgespannt. Zur Erhöhung der Dichtwirkung ist in dieser Ausführung ein Dichtelement in der Form eines O-Rings zwischen Ventilsitz und Ventilstößel angeordnet.

Dieses erste Wassertankauslassventil 7.1 ist in dichtendem Zustand mit dem Ventilstößel des zweiten Wassertankauslassventils 7.2 mitbeweglich ausgebildet. D.h., wenn der Ventilstößel des zweiten, äußeren Wassertankauslassventils 7.2 durch Betätigung angehoben wird, also gegen das Innere des Wassertanks gedrückt wird, z. B. durch Aufsetzen des tankseitigen Maschinenanschlusselementes 7 auf das komplementäre Aktivierungselement 8.2 des geräteseitigen Tankanschlusselements, hat das grundsätzlich keine Auswirkung auf den Schließzustand des ersten, inneren Wassertankauslassventils 7.1. Dieses bleibt, ausgehend von einer Ruhestellung, weiterhin geschlossen.

Um bei im Wassertank 1 eingesetzter Wasserfilterpatrone 2 eine dauerhaft zuverlässige Abdichtung zischen dem Anschlussstutzen ersten Wasserfilterpatronenauslass 2.1, hier in der Form des rohrförmigen Abschnitts 2.1.1, auch bei einer solchen zumindest axialen Positionsveränderung des diesem zugeordneten, ersten Wassertankauslassventils 7.1 sicherzustellen, ist die daran anschließende Filterkammer 3.1 ebenfalls zumindest axial in der Aufnahmekammer der Wasserfilterpatrone 2 angeordnet.

Dies hat die Wirkung, dass unabhängig vom Schließzustand des zweiten, äußeren Wassertankauslassventils 7.2 das erste, innere Wassertankauslassventil 7.1 bei betriebsüblicher Handhabung solange geschlossen bleibt, bis es durch ein zu ihm komplementäres Aktivierungselement 8.1 am geräteseitigen Tankanschlusselement 8 aktiviert wird. Und das ist, bei betriebsgemäßer Handhabung, nur bei auf das maschinenseitige Tankanschlusselement aufgesetztem Wassertank möglich.

Die zuverlässig Dichtwirkung zwischen dem ersten Wassertankauslassventil 7.1 und dem rohrförmigen Abschnitt 2.1.1 ist dadurch auch für den Fall sichergestellt, dass bei der Entnahme des Wassertanks 1 das zweite Wassertankauslassventil 7.2 ggf. am maschinenseitigen Tankanschlusselement 8 festsitzen sollte. Denn eine mögliche Zugwirkung auf die Verbindung zwischen erstem Wassertankauslassventil 7.1 und dem rohrförmigen Abschnitt 2.1.1 wird dadurch verhindert, dass die an letzteren anschließende Filterkammer 3.1 axial beweglich und im betriebsgemäßen Zustand angehoben in der Wasserfilterpatrone 2 angeordnet ist.

Sollte also das zweite Wassertankauslassventil 7.2 bei der Entnahme des Wassertanks 1 fest sitzen und sich deshalb nicht gleich lösen, so sorgt das axiale Spiel der Filterkammer 3.1 für ausreichend relative Bewegungsfreiheit des mit ihr fest verbundenen Abschnitts 2.1.1 gegenüber der Filterpatrone 2, so dass dieser die relative Bewegung des zweiten Wassertankauslassventils 7.2 gegenüber der Wasserfilterpatrone 1 so weit mitmachen kann, bis sich der Ventilstößel des zweiten Wassertankauslassventils 7.2 zwangsweise aus der Ausnehmung/Aufnahme 8.3 des maschinenseitigen Tankanschlusselementes 8 löst. Dies geschieht durch das den Bewegungsbereich des ersten Ventilstößels begrenzende mechanisches Aufsitzen des Dichtbereichs des Ventilstößels auf dem Ventilsitz. Sobald der Ventilstößel am Ventilstößel anliegt muss er zwangsweise aus der Ausnehmung/Aufnahme 8.3 des Maschinenseitigen Tankanschlusselementes ausrücken.

Somit kann solange kein Wasser über den ersten Filterkanal 3 aus dem Wassertank 1 austreten bis das Wassertankauslassventil 7.1 ordnungsgemäß durch Aktivierungselement 8.1 angehoben wird.

In der Filterkammer 3.1 kann beispielsweise ein Entkalkungsmittel angeordnet sein, z.B. ein Ionentauscher, um das mit der Filterpatrone 2 aufzubereitende Wasser 6 möglichst gegen Ausfällungen bei dessen Erhitzung zur Zubereitung von Heißgetränken zu behandeln. Vorzugsweise ist der Filterkammer 3.1 in der Filterpatrone 2 stromaufwärts bereits eine weitere Filterstrecke vorgeschaltet, z.B. ein Aktivkohlefilter zur Entkeimung und/oder Geschmacksverbesserung, insbesondere auch zur Aufbereitung des über den Strömungskanal 4 an der Filterkammer 3.1 vorbeigeführten Wassers 6.

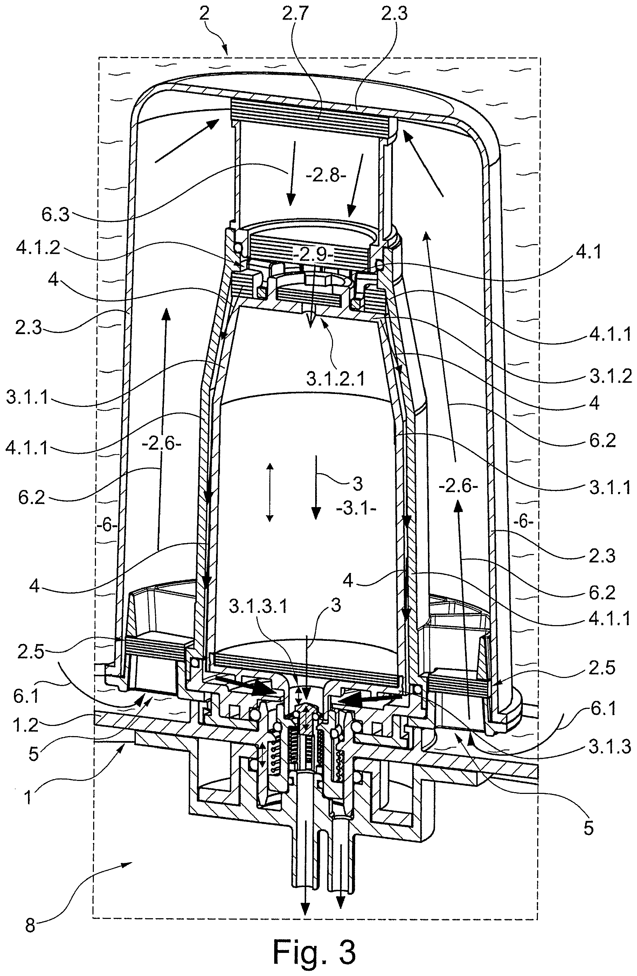

Der Ventilstößel des zweiten Wassertankauslassventils 7.2 ist, wiederum im vom maschinenseitigen Tankanschlusselement 8 abgenommenen Zustand des Wassertanks 1, ebenfalls mittels einer Rückstellfeder dichtend gegen den Ventilsitz des zweiten Wassertankauslassventils 7.2 gedrückt, vorzugsweise ebenfalls unter Verwendung eines zwischenliegenden Dichtelementes, insbesondere eines O-Rings. Das zweite Wassertankauslassventil 7.2 verschließt bzw. öffnet den Strömungskanal 4 der Wasserfilterpatrone 2 in deren im Wassertank eingesteckten Zustand, wie in der Figur 1 dargestellt. Der Strömungskanal 4 verläuft zwischen der Außenwand der zumindest axial in der Filterpatrone 2 beweglich angeordneten Filterkammer 3.1 und der Innenwand der diese Filterkammer 3.1 beweglich aufnehmenden Aufnahmekammer 4.1 (s. auch Fig. 3).

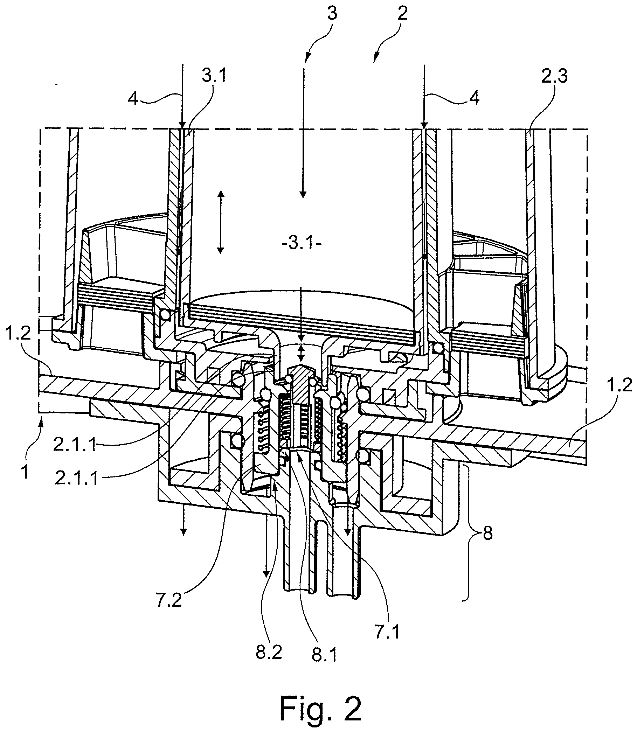

Um bei in das maschinenseitige Tankanschlusselement 8 eingesetztem tankseitigen Maschinenanschlusselement 7 (s. Fig. 2) auch die Dichtwirkung nach außen zu verbessern, kann zischen dem Maschinenanschlusselement 7 und der dazu komplementären Ausnehmung/Aufnahme im maschinenseitigen Tankanschlusselement 8 ebenfalls ein Dichtelement 8.3.1 angeordnet sein, bevorzugt wiederum in der Form eines O-Rings. Zur Erhöhung der Dichtwirkung nach innen hin kann ein Dichtelement 8.1.1 angeordnet sein, bevorzugt wiederum in der Form eines O-Rings.

Der Vollständigkeit halber ist schematisch eine Getränke aufbereitende Maschine 10 an die beiden vom maschinenseitigen Tankanschlusselement 8 abgehenden Leitungen 9.1 und 9.2 für die Weiterleitung der beiden hydraulisch voneinander getrennten Filtratströme der Strömungskanäle 3 und 4 dargestellt. Der Filtratstrom des Strömungskanals 3 wird zentral durch das maschinenseitige Tankanschlusselement 8 in die Leitung 9.1 hindurchgeleitet. Der Filtratstrom des Strömungskanals 4 wird über die von der Ausnehmung/Aufnahme 8.3 gebildeten Kammer 8.3.2 an die Leitung 9.2 weitergeführt.

An der Innenseite des Wassertanks 1 ist die Wasserfilterpatrone 2 mit einem patronenseitigen Tankanschlusselement 2.4 an einem tankseitigen Wasserfilterpatronen-Anschlusselement 1.1 angeschlossen. Vorzugsweise handelt es sich hierbei um zwei zueinander komplementäre, hülsenartige Bauteile, die ineinandersteckbar ausgebildet sind. Zur Erhöhung der Dichtwirkung kann zwischen ihnen ein Dichtelement 2.4.1 angeordnet sein, z.B. i.d.F. eines O-Rings.

Zur Fixierung am Wassertank 1 kann die der Wasserfilterpatrone 2 ein patronenseitiges Fixierelement 2.4.2 zur Interaktion mit einem komplementären, tankseitigen Wasserfilterpatronen-Fixierelement 1.1.1 aufweisen, insbesondere in der Form eines Bajonettverschlusses.

Die **Figur 2** zeigt, ebenfalls ausschnittweise und in Schnittdarstellung, den Wassertank 1 mit darin eingesetzter Wasserfilterpatrone 2, wobei jedoch im Unterschied zur Figur 1 das tankseitige Maschinenanschlusselement 7 mit dem maschinenseitigen Tankanschlusselement 8 verbunden / in dieses eingesteckt ist.

Der Ventilstößel des ersten Wassertankauslassventils 7.1 sitzt auf dem Aktivierungselement 8.1 auf und der Ventilstößel des zweiten Wassertankauslassventils 7.2 sitzt auf dem Aktivierungselement 8.2 auf, so dass die beiden Wassertankauslassventile des Wassertanks 1 geöffnet sind.

Der rohrförmige Abschnitt 2.1.1 des ersten Wasserpatronenauslasses 2.1 ist aus einem weicheren Material gefertigt als das komplementäre, tankseitig angeordnete Wasserfilterpatronen-Anschlusselement 1.1. Es ist steckelementartig mit letzterem dichtend verbunden. Im vorliegenden Beispiel ist der rohrförmige Abschnitt 2.1.1 in eine Ausnehmung des Ventilstößels des zweiten, radial äußeren der beiden konzentrisch zueinander angeordneten Wassertankauslassventile 7.1 und 7.2 eingesteckt. Alternativ könnte der rohrförmige Abschnitt 2.1.1 auch so ausgebildet werden, dass er auf den Ventilstößel des zweiten Wassertankauslassventils 7.2 dichtend aufsteckbar ist.

Die **Figur 3** zeigt, wiederum ausschnittweise und in Schnittdarstellung, den Wassertank 1 mit darin eingesetzter Wasserfilterpatrone 2 wie in Figur 2, wobei hier das Augenmerk auf der Filterpatrone 2 liegt, die über die gesamte Höhenerstreckung ihres Gehäuses 2.3 dargestellt ist.

Im Bereich des Einlasses 5 der Filterpatrone 2 ist ein erstes Filter- und/oder Rückhalteelement 2.5 angeordnet, z.B. i.d.F. eines Flieses oder Siebs. Dahinter schließt im Inneren des Gehäuses 2.3 eine Filterkammer 2.6 an, in der z.B. ein Aktivkohlefilter angeordnet sein kann.

Durch diese Filterkammer 2.6 fließt das aus dem Wassertank 1 in die Wasserfilterpatrone 2 einströmende Wasser 6 in Richtung des Pfeils 6.2. An der dem Einlass 5 gegen überliegenden Innenseite des Gehäuses 2.3 der Wasserfilterpatrone 2 ist ein weiteres Filter- und/oder Rückhalteelement 2.7 angeordnet, z.B. ebenfalls i.d.F. eines Flieses oder Siebs. Dieses kann auch elastische Eigenschaften aufweisen, z.B. um beim Zusammenbau der Wasserfilterpatrone weitere in deren Gehäuse aufzunehmende Bauteile abzustützen, insbesondere zumindest unter leichter Vorspannung. Dies bewirkt im Weiteren eine erhöhte Dichtwirkung zwischen den einzelnen Bauteilen der Wasserfilterpatrone 2 gegen unerwünschtes wandern von granularen Teilen.

In Strömungsrichtung des Wassers 6 schließt im Inneren der Wasserfilterpatrone 2 an das Filter- und/oder Rückhalteelement 2.7 eine Filterkammer 2.8 an. Diese kann z.B. mit einem Partikelfilter ausgestattet und mit einem weiteren Filter- und/oder Rückhalteelement 2.9 stromabwärts gegen austreten von Filtermaterial verschlossen aber dennoch für das aufzubereitende Wasser 6 durchlässig sein. Diese Filterkammer 2.8 kann als Einlegebauteil ausgebildet sein, ggf. umfassend die beiden Filter- und/oder Rückhalteelemente 2.7 und 2.9.

Dem Filter- und/oder Rückhalteelement 2.9 folgt in Strömungsrichtung des Wassers 6 entsprechend der Richtung der Pfeile 6.3 die Aufnahmekammer 4.1. Sie wird durch die Wandung 4.1.1 begrenzt und von der Filterkammer 2.6 wasserdicht abgetrennt.

Im Inneren der Aufnahmekammer 4.1 ist die Filterkammer 3.1 zumindest axial beweglich, vorzugsweise aber auch radial beweglich aufgenommen. Diese Filterkammer 3.1 ist durch deren Wandung 3.1.1 und deren stirnseitige Deckel- und Bodenelemente 3.1.2 und 3.1.3 gegenüber der Aufnahmekammer 4.1 wasserdicht abgeschlossen.

Am Deckelelement 3.1.2 ist eine Einlassöffnung 3.1.2.1 in die Filterkammer 3.1 hinein ausgebildet. Am Bodenelement 3.1.3 ist ebenfalls eine Öffnung 3.1.3.1 ausgebildet. Bei dieser handelt es sich um die Auslassöffnung für den Austritt des in der Filterkammer 3.1. weiter aufbereiteten Wassers. Sowohl an der Einlass- als auch an der Auslassöffnung sind jeweils ein weiteres Filter- und/oder Rückhalteelement angeordnet, um einen Austritt von Filtermaterial aus der Filterkammer 3.1 zu verhindern, aber Wasser durchfliesen lassen zu können.

Um den Auslass 3.1.3.1 ist am Boden 3.1.3 der Filterkammer 3.1 mit ihm fest verbunden der weiter oben bereits beschriebene, erste Wasserfilterpatronenauslass 2.1 in der Form des rohrförmigen Abschnittes 2.1.1 angeformt. Dieser ist aus einem weicheren Material als der Ventilstößel des zweiten Tankauslassventils 7.2 ausgebildet und klemmend in dessen Ausnehmung eingesteckt. Dadurch können der rohrförmige Abschnitt 2.1.1 und die mit ihm fest verbundene Filterkammer 3.1 eine dem Ventilstößel des zweiten Tankauslassventils 7.2 bei der Entnahme des Wassertanks aus dem maschinenseitigen Tankanschlusselement 8 ggf. durch Klemmen des Ventilstößels in der Ausnehmung/Aufnehme 8.3 aufgeprägte Bewegung mitmachen, insbesondere axial, vorzugsweise aber auch radial.

Das von der Wasserfilterpatrone 2 aufzubereitende aus dem Wassertank entnommene Wasser 6 strömt bis in den Einlassbereich der Aufnahmekammer 4.1 gemäß der Richtung der Peile 6.1 bis 6.3 als ein durch die durchflossenen Filterstrecken 2.5 bis 2.9 gemeinsam aufbereiteter Wasserstrom. Im Einlassbereich der Aufnahmekammer 4.1 wird dieser Wasserstrom in zwei hydraulisch voneinander getrennte Strömungspfade 3 und 4 aufgeteilt.

Der erste Strömungspfad 3 führt durch die Filterkammer 3.1 und das darin angeordnete Entkalkungsmittel, wie z.B. einen Ionentauscher. Dadurch wird das für eine Aufbereitung eines Heißgetränks durch die Getränke aufbereitende Maschine 10 aus dem Wassertank 1 zu entnehmende Wasser entkalkt (s. Fig. 1).

Der zweite Strömungspfad 4 führt das durch die Filterstrecken 2.5 bis 2.9 bereits aufbereitete Wasser 6 durch die Aufnahmekammer 4.1 an der Filterkammer 3.1 vorbei zum zweiten Wasserfilterpatronenauslass 2.2. Das über diesen Strömungspfad 4 geleitete Wasser 6 ist zur Aufbereitung eines Kaltgetränkes mittels der Getränke aufbereitenden Maschine 10 vorgesehen.

Um die Filterkammer 3.1 beabstandet von der Wandung 4.1.1 in der Aufnahmekammer positionieren zu können, sind an der Wandung 4.1.1 und/oder an der Wandung 3.1.1 der Filterkammer 3.1 Rippen und/oder Noppen oder dgl. Abstandshalteelemente 4.1.2 angeordnet. In der Figur 3 sind solche beispielhaft im Einlassbereich der Aufnahmekammer dargestellt.

Zur Vermeidung eines Rücksaugeeffektes aus dem jeweils anderen der beiden Strömungskanäle 3 und 4 kann zumindest in einem der beiden Strömungskanäle, vorzugsweise jedoch in beiden ein Rückschlagventil angeordnet sein.

### Bezugszeichenliste:

1 Wassertank
1.1 tankseitiges Wasserfilterpatronen-Anschlusselement
1.1.1 tankseitiges Fixierelement
1.2 Boden
2 Wasserfilterpatrone
2.1 erster Wasserfilterpatronenauslass
2.1.1 rohrförmiger Abschnitt
2.1.1.1 Dichtfläche
2.2 zweiter Wasserfilterpatronenauslass
2.3 Gehäuse
2.4 patronenseitiges Tankanschlusselement
2.4.1 Dichtelement
2.4.2 patronenseitiges Fixierelement
2.5 Filter- und/oder Rückhalteelement
2.6 Filterkammer / Aktivkohle
2.7 Filter- und/oder Rückhalteelement
2.8 Filterkammer
2.9 Filter- und/oder Rückhalteelement
3 erster Strömungspfad
3.1 Filterkammer
3.1.2 Deckel
3.1.3 Boden
3.1.3.1 Auslass
4 zweiter Strömungspfad
4.1 Aufnahmekammer
4.1.1 Wandung
4.1.2 Rippen/Noppen/Abstandshaltelemente
5 Einlass
6 Wasser
6.1 Pfeil
6.2 Pfeil
6.3 Pfeil
7 tankseitiges Maschinenanschlusselement
7.1 erstes Wassertankauslassventil
7.2 zweites Wassertankauslassventil
8 maschinenseitiges Tankanschlusselement
8.1 Aktivierungselement
8.1.1 Dichtelement
8.2 Aktivierungselement
8.3 Ausnehmung/Aufnahme
8.3.1 Dichtelement
8.3.2 Kammer
9.1 Leitung
9.2 Leitung
10 Getränke aufbereitende Maschine/Gerät

## Patentansprüche

1. **Wasserfilterpatrone (2),** insbesondere zur Verwendung in einem Wassertank (1), **dadurch gekennzeichnet, dass** die Wasserfilterpatrone (2) zwei konzentrisch zueinander angeordnete Wasserfilterpatronenauslässe (2.1; 2.2) umfasst, wobei ein erster (2.1) der beiden konzentrisch zueinander angeordneten Wasserfilterpatronenauslässe (2.1; 2.2) zumindest axial, vorzugsweise auch radial im Gehäuse (2.3) der Wasserfilterpatrone (2) beweglich angeordnet ist.

2. Wasserfilterpatrone nach Anspruch 1, **dadurch gekennzeichnet, dass** der erste, beweglich angeordnete Wasserfilterpatronenauslass (2.1) steckelementartig mit einem rohrförmigen Abschnitt (2.1.1) zur wasserdichten Interaktion mit einem komplementären, tankseitig angeordneten Wasserfilterpatronen-Anschlusselement (1.1), insbesondere einem Tankauslassventil (7.2), ausgebildet ist.

3. Wasserfilterpatrone nach einem der Ansprüche 2 oder 3, **dadurch gekennzeichnet, dass** der rohrförmige Abschnitt (2.1.1) eine radial gegenüber einem komplementären, tankseitig angeordneten Wasserfilterpatronen-Anschlusselement (1.1) wirkende Dichtfläche (2.1.1.1) ausbildet.

4. Wasserfilterpatrone nach einem der vorangehenden Ansprüche, **dadurch gekennzeichnet, dass** der erste (2.1) der beiden konzentrisch zueinander angeordneten Wasserfilterpatronenauslässe (2.1; 2.2) einem ersten durch die Wasserfilterpatrone (2) ausgebildeten Strömungskanal (3) zugeordnet ist und der zweite Wasserfilterpatronenauslass (2.2) einem vom ersten Strömungskanal (3) zumindest abschnittsweise getrennt ausgebildeten zweiten Strömungskanal (4) durch die Wasserfilterpatrone (2) zugeordnet ist.

5. Wasserfilterpatrone nach Anspruch 4, **dadurch gekennzeichnet, dass** der erste Strömungskanal (3) eine zumindest axial, vorzugsweise auch radial im Gehäuse (2.3) der (2) Wasserfilterpatrone beweglich angeordnete Filterkammer (3.1) umfasst.

6. Wasserfilterpatrone nach Anspruch 5, **dadurch gekennzeichnet, dass** an der beweglich angeordneten Filterkammer (3.1) und/oder in einer komplementären Aufnahmekammer (4.1) für die Filterkammer (3.1) in der Wasserfilterpatrone (2) Abstandsrippen und/oder Abstandsnoppen oder dgl. zur Beabstandung der beiden Kammern 3.1; 4.1) zueinander ausgebildet sind.

7. Wasserfilterpatrone nach Anspruch 6, **dadurch gekennzeichnet, dass** die komplementäre Aufnahmekammer (4.1) für die Filterkammer (3.1) als von Filtermaterial freie Strömungskammer als Teil des zweiten Strömungskanals (4) ausgebildet ist.

8. Wasserfilterpatrone nach einem der Ansprüche 4 bis 7, **dadurch gekennzeichnet, dass** zumindest in einem der beiden Strömungskanäle (3; 4) ein Rückschlagventil angeordnet ist.

9. Wasserfilterpatrone nach Anspruch 8, **dadurch gekennzeichnet, dass** auch im zweiten der beiden Strömungskanäle (3; 4) ein Rückschlagventil angeordnet ist.

10. Wasserfilterpatrone nach einem der vorangehenden Ansprüche, **dadurch gekennzeichnet, dass** die Wasserfilterpatrone (2) ein patronenseitiges Fixierelement (2.4.2) zur Interaktion mit einem komplementären, tankseitigen Wasserfilterpatronen-Fixierelement (1.1.1) aufweist, insbesondere in der Form eines Bajonettverschlusses.

11. Wasserfilterpatrone nach einem der Ansprüche 5 bis 10, **dadurch gekennzeichnet, dass** in der Filterkammer (3.1) ein Ionentauschermaterial angeordnet ist.

12. Wasserfilterpatrone nach einem der vorangehenden Ansprüche, **dadurch gekennzeichnet, dass** die Wasserfilterpatrone (2) einen Partikelfilter und/oder einen Aktivkohlefilter umfasst.

## Claims

1. **Water filter cartridge** (2), in particular for use in a water tank (1), **characterized in that** the water filter cartridge (2) comprises two mutually concentrically disposed water filter cartridge outlets (2.1; 2.2), wherein a first (2.1) of the two mutually concentrically disposed water filter cartridge outlets (2.1; 2.2) is disposed so as to be ovable at least axially, preferably also radially, in the casing (2.3) of the water filter cartridge (2).

2. Water filter cartridge according to Claim 1, **characterized in that** the first, movably disposed, water filter cartridge outlet (2.1) in the manner of a plug-in element is configured having a tubular portion (2.1.1) for interacting in a water-tight manner with a complementary water filter cartridge connector element (1.1) disposed proximal to the tank, in particular a tank outlet valve (7.2).

3. Water filter cartridge according to one of Claims 2 or 3, **characterized in that** the tubular portion (2.1.1) configures a sealing face (2.1.1.1) that acts radially in relation to a complementary water filter cartridge connector element (1.1) disposed proximal to the tank.

4. Water filter cartridge according to one of the preceding claims, **characterized in that** the first (2.1) of the two mutually concentrically disposed water filter cartridge outlets (2.1; 2.2) is assigned to a first flow duct (3) configured through the water filter cartridge (2), and the second water filter cartridge outlet (2.2) is assigned to a second flow duct (4) through the water filter cartridge (2) that at least in portions is configured separately from the first flow duct (3).

5. Water filter cartridge according to Claim 4, **characterized in that** the first flow duct (3) comprises a filter chamber (3.1) that is disposed so as to be movable at least axially, preferably also radially, in the casing (2.3) of the water filter cartridge (2).

6. Water filter cartridge according to Claim 5, **characterized in that** spacer ribs and/or spacer studs or the like for mutually spacing apart the two chambers (3.1; 4.1) are configured on the movably disposed filter chamber (3.1) and/or in a complementary receptacle chamber (4.1) for the filter chamber (3.1) in the water filter cartridge (2).

7. Water filter cartridge according to Claim 6, **characterized in that** the complementary receptacle chamber (4.1) for the filter chamber (3.1) as part of the second flow duct (4) is configured as a flow chamber free of filter material.

8. Water filter cartridge according to one of Claims 4 to 7, **characterized in that** a stop valve is disposed in at least one of the two flow ducts (3; 4).

9. Water filter cartridge according to Claim 8, **characterized in that** a stop valve is also disposed in the second of the two flow ducts (3; 4).

10. Water filter cartridge according to one of the preceding claims, **characterized in that** the water filter cartridge (2) has a cartridge-proximal fixing element (2.4.2) for interacting with a complementary, tank-proximal water filter cartridge fixing element (1.1.1), in particular in the form of a bayonet closure.

11. Water filter cartridge according to one of Claims 5 to 10, **characterized in that** an ion exchange material is disposed in the filter chamber (3.1).

12. Water filter cartridge according to one of the preceding claims, **characterized in that** the water filter cartridge (2) comprises a particle filter and/or an activated carbon filter.

## Revendications

1. Cartouche (2) de filtre à eau, en particulier pour utilisation dans un réservoir d'eau (1), **caractérisée en ce que** la cartouche (2) de filtre à eau comprend deux sorties (2.1 ; 2.2) de cartouche de filtre à eau disposées concentriquement l'une à l'autre, une première (2.1) des deux sorties (2.1 ; 2.2) de cartouche de filtre à eau disposées concentriquement l'une à l'autre étant disposée de façon mobile au moins axialement, de préférence également radialement, dans le boîtier (2.3) de la cartouche (2) de filtre à eau.

2. Cartouche de filtre à eau selon la revendication 1, **caractérisée en ce que** la première sortie (2.1) de cartouche de filtre à eau disposée de façon mobile est configurée en élément enfichable présentant une partie tubulaire (2.1.1) destinée à l'interaction étanche à l'eau avec un élément de raccordement (1.1) de cartouche de filtre à eau, disposé du côté réservoir, en particulier une vanne de sortie (7.2) de réservoir.

3. Cartouche de filtre à eau selon l'une quelconque des revendications 2 et 3, **caractérisée en ce que** la partie tubulaire (2.1.1) forme une surface d'étanchéité (2.1.1.1) agissant radialement vis-à-vis d'un élément de raccordement (1.1) complémentaire, de cartouche de filtre à eau, disposé du côté réservoir.

4. Cartouche de filtre à eau selon l'une quelconque des revendications précédentes, **caractérisée en ce que** la première (2.1) des deux sorties (2.1 ; 2.2) de cartouche de filtre à eau disposées concentriquement l'une à l'autre est affectée à un premier canal d'écoulement (3) formé à travers la cartouche (2) de filtre à eau et la seconde sortie (2.2) de cartouche de filtre à eau est affectée à un second canal d'écoulement (4) à travers la cartouche (2) de filtre à eau, séparé au moins en partie du premier canal d'écoulement (3).

5. Cartouche de filtre à eau selon la revendication 4, **caractérisée en ce que** le premier canal d'écoulement (3) comprend une chambre de filtration (3.1) disposée de façon mobile au moins axialement, de préférence également radialement dans le boîtier (2.3) de la cartouche (2) de filtre à eau.

6. Cartouche de filtre à eau selon la revendication 5, **caractérisée en ce que** des nervures d'espacement et/ou des boutons d'espacement ou similaires sont réalisés sur la chambre de filtration (3.1) disposée de façon mobile et/ou dans une chambre de réception (4.1) complémentaire de la chambre de filtration (3.1) dans la cartouche (2) de filtre à eau, pour l'espacement des deux chambres (3.1 ; 4.1) l'une de l'autre.

7. Cartouche de filtre à eau selon la revendication 6, **caractérisée en ce que** la chambre de réception (4.1) complémentaire de la chambre de filtration (3.1) est réalisée sous forme de chambre d'écoulement exempte de matière filtrante, en tant que partie du second canal d'écoulement (4).

8. Cartouche de filtre à eau selon l'une quelconque des revendications 4 à 7, **caractérisée en ce qu'**un clapet antiretour est disposé au moins dans l'un des deux canaux d'écoulement (3 ; 4).

9. Cartouche de filtre à eau selon la revendication 8, **caractérisée en ce qu'**un clapet antiretour est également disposé dans le second des deux canaux d'écoulement (3 ; 4).

10. Cartouche de filtre à eau selon l'une quelconque des revendications précédentes, **caractérisée en ce que** la cartouche (2) de filtre à eau comporte un élément de fixation (2.4.2) du côté cartouche, destiné à l'interaction avec un élément de fixation (1.1.1) complémentaire, de cartouche de filtre à eau, du côté réservoir, en particulier sous la forme d'un joint à baïonnette.

11. Cartouche de filtre à eau selon l'une quelconque des revendications 5 à 10, **caractérisée en ce qu'**une matière échangeuse d'ions est disposée dans la chambre de filtration (3.1).

12. Cartouche de filtre à eau selon l'une quelconque des revendications précédentes, **caractérisée en ce que** la cartouche (2) de filtre à eau comprend un filtre à particules et/ou un filtre à charbon actif.
